# EUROPEAN PATENT APPLICATION

(11) **EP 4 600 122 A1**
(43) Date of publication of application: **13.08.2025**
(21) Application number: 23935019.2
(22) Date of filing: 15.11.2023
(51) Int. Cl.: B62D 57/032

(54) **ROBOT HIP JOINT, CONTROL METHOD AND APPARATUS, AND ROBOT**

(30) Priority: 26.04.2023 CN 202310478135
(71) Applicant: Tencent Technology (Shenzhen) Company Limited, Shenzhen, Guangdong 518057 (CN)
(72) Inventor: ZHANG, Dongsheng, Shenzhen, Guangdong 518057 (CN); LI, Xiong, Shenzhen, Guangdong 518057 (CN); ZHANG, Yufeng, Shenzhen, Guangdong 518057 (CN); SHENG, Minhua, Shenzhen, Guangdong 518057 (CN); LI, Jingchen, Shenzhen, Guangdong 518057 (CN); ZHANG, Zhengyou, Shenzhen, Guangdong 518057 (CN)
(74) Representative: Reddie & Grose LLP
(86) International application number: PCT/CN2023/131736
(87) International publication number: WO 2024/221851

(57) **Abstract**

Embodiments of the present application relate to the technical field of robots, and provide a robot hip joint, a control method and apparatus, and a robot. The robot hip joint comprises a supporting assembly, a driving assembly, and an execution assembly; the driving assembly comprises a first driver, a second driver, and a third driver, and the execution assembly comprises a first leg moving member, a second leg moving member, and a waist moving member; the first leg moving member and the second leg moving member are respectively rotatably connected to the supporting assembly; the first driver is transmittingly connected to the first leg moving member and is used for driving the first leg moving member to rotate around a first axis; the second driver is used for driving the second leg moving member to rotate around the first axis; the waist moving member is rotatably connected to the supporting assembly; the third driver is transmittingly connected to the waist moving member, and is used for driving the waist moving member to rotate around a second axis; the first axis and the second axis are parallel to each other. The embodiments of the present application are compact in structure and suitable for scenarios such as climbing stairs.

## Description

### RELATED APPLICATION

This application claims priority to Chinese Patent Application 202310478135.8, entitled "ROBOT HIP JOINT, CONTROL METHOD AND APPARATUS, AND ROBOT" and filed on April 26, 2023.

### FIELD OF THE TECHNOLOGY

This application relates to the field of robot technologies, and in particular, to a robot hip joint, a control method and apparatus, and a robot.

### BACKGROUND OF THE DISCLOSURE

A hip joint is one of key parts of a leg mechanism of a robot, is a connecting component of a leg component of the robot, and is also a support component of an upper body of the robot. In addition, driving elements with a plurality of degrees of freedom need to be integrated. The mechanical efficiency and the driving efficiency of the hip joint directly affect overall control and energy consumption of the robot.

Most of hip joints in the related art have a human-like degree-of-freedom deployment, mainly using a serial or parallel 2/3 degree-of-freedom implementation form.

### SUMMARY

Embodiments of this application provide a robot hip joint, a control method and apparatus, and a robot, to meet a working requirement of a use scenario, for example, a human-like hip joint climbing stairs.

Technical solutions are as follows:
According to an aspect, an embodiment of this application provides a robot hip joint, the robot hip joint including: a support assembly, a drive assembly, and an execution assembly,
the drive assembly including a first driver, a second driver, and a third driver, and the execution assembly including a first movable leg member, a second movable leg member, and a movable waist member;
the first movable leg member and the second movable leg member being separately and rotatably connected to the support assembly, the first driver being in a transmission connection to the first movable leg member, the first driver being configured to drive the first movable leg member to rotate around a first axis, and the second driver being configured to drive the second movable leg member to rotate around the first axis;
the movable waist member being rotatably connected to the support assembly, the third driver being in a transmission connection to the movable waist member, and the third driver being configured to drive the movable waist member to rotate about a second axis; and
the first axis being parallel to the second axis.

According to another aspect, an embodiment of this application provides a robot, the robot including: the robot hip joint described in this application.

According to another aspect, an embodiment of this application provides a control method, the control method being used for controlling the robot hip joint described in this application, and the control method including:
determining a motion mode of the robot hip joint;
generating a control signal based on the motion mode; and
transmitting the control signal to a drive assembly of the robot hip joint.

According to another aspect, an embodiment of this application provides a control apparatus, the control apparatus including:
a determining module, configured to determine a motion mode of the robot hip joint;
a signal generation module, configured to generate a control signal based on the motion mode; and
a transmitting module, configured to transmit the control signal to a drive assembly of the robot hip joint.

According to another aspect, an embodiment of this application provides a computer device, the computer device including a memory and a processor, the memory having at least one piece of program code stored therein, and the program code being loaded and executed by the processor, to implement the above control method.

According to another aspect, an embodiment of this application provides a non-volatile computer-readable storage medium, the storage medium having a computer program stored therein, and the computer program being executed by a processor, to implement the above control method.

According to another aspect, an embodiment of this application provides a chip, including at least one of a programmable logic circuit and program instructions, and during running of an electronic device on which the chip is installed, being configured to implement the above control method.

According to still another aspect, an embodiment of this application provides a computer program product, the computer program product including computer instructions, the computer instructions being stored in a computer-readable storage medium, and a processor reading the computer instructions from the computer-readable storage medium and executing the computer instructions, to implement the above control method.

Based on the robot hip joint in the embodiments of this application, the first movable leg member and the second movable leg member can be respectively driven by the first driver and the second driver to rotate about the first axis, to drive a leg action of the robot. A rotation degree of freedom of the first movable leg member and a rotation degree of freedom of the second movable leg member are coaxial. The movable waist member is driven by the third driver to rotate about the second axis, to drive a waist action of the robot. The first axis and the second axis are disposed in parallel. The structure is more compact, and can be applicable to a use scenario, for example, climbing stairs.

### BRIEF DESCRIPTION OF THE DRAWINGS

FIG. 1 is a schematic structural diagram of a robot hip joint according to an embodiment of this application.
FIG. 2 is a front view of a structure of a robot hip joint according to an embodiment of this application.
FIG. 3 is a schematic structural diagram of a robot hip joint according to another embodiment of this application.
FIG. 4 is a diagram of a status of a connection between a robot hip joint and a leg component according to an embodiment of this application.
FIG. 5 is an exploded view of a structure of a robot hip joint according to an embodiment of this application.
FIG. 6 is a schematic structural diagram of a support assembly according to an embodiment of this application.
FIG. 7 is an exploded view of a structure of a support assembly according to an embodiment of this application.
FIG. 8 is a schematic structural diagram of a support assembly from another perspective according to an embodiment of this application.
FIG. 9 is a schematic flowchart of a control method according to an embodiment of this application.
FIG. 10 is a schematic structural diagram of a control apparatus according to an embodiment of this application.
FIG. 11 is a block diagram of a computer device according to an embodiment of this application.

Reference numerals in the figures are respectively indicated as follows:
001. first axis; 002. second axis; 003. third axis;
1. support assembly;
11. first mechanical part; 111. first shaft sleeve portion; 112. third shaft sleeve portion; 113. first mounting portion;
12. second mechanical part; 121. second shaft sleeve portion; 122. fourth shaft sleeve portion; 123. second mounting portion;
13. third mechanical part; 131. Frame body; 1311. arc-shaped frame body; 1312. cylindrical frame body;
2. drive assembly;
21. first driver; 22. second driver; 23. third driver;
3. execution assembly;
31. first movable leg member; 311. rotating shaft member; 312. first connecting plate;
32. second movable leg member; 321. shaft sleeve member; 322. second connecting plate;
33. movable waist member;
4. leg component;
41. first leg component; 42. second leg component;
5. transmission mechanism;
51. first gear member; 52. second gear member;
6. determining module;
7. signal generation module;
8. transmitting module; and
901. processor; 902. memory; 903. peripheral device interface; 904. radio frequency circuit; 906. camera assembly; 907. audio circuit; 908. positioning assembly; 909. power supply; 910. sensor; 911. acceleration sensor; and 912. gyroscope sensor.

### DESCRIPTION OF EMBODIMENTS

Exemplary embodiments are described in detail herein, and examples of the exemplary embodiments are shown in the accompanying drawings. When the following descriptions involve the accompanying drawings, unless otherwise indicated, the same numerals in different accompanying drawings represent the same or similar elements. The implementations described in the following exemplary embodiments do not represent all implementations that are consistent with the embodiments of this application. In contrast, the implementations are merely examples of an apparatus and a method that are described in detail in the appended claims and that are consistent with some aspects of the embodiments of this application.

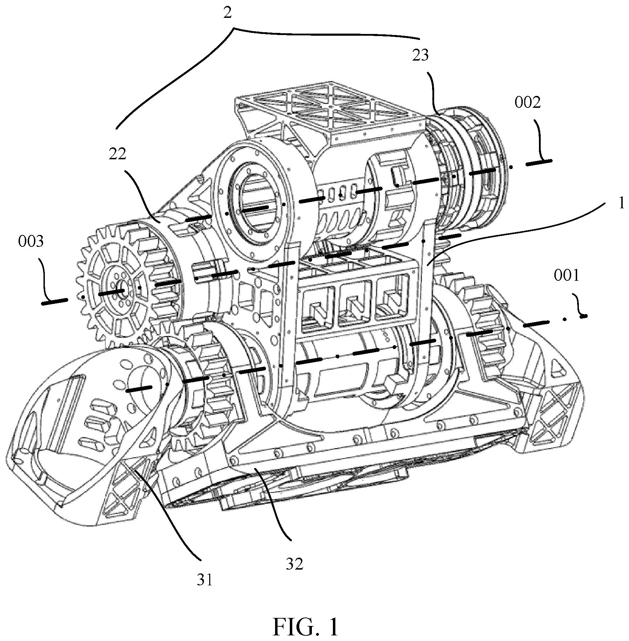

In the descriptions of the embodiments of this application, an orientation or positional relationship indicated by the term "center", "longitudinal", "transverse", "length", "width", "thickness", "above", "beneath", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in FIG. 1, and is merely for ease of describing the embodiments of this application and simplifying the descriptions, but does not indicate or imply that an apparatus or an element referred to is required to have a specific orientation or be constructed and operated in a specific orientation, and therefore cannot be understood as a limitation on the embodiments of this application.

Unless otherwise indicated, all technical terms used in the embodiments of this application have the same meaning as those commonly understood by a person of ordinary skill in the art.

With continuous development and evolution of robots, types and functions of the robots continuously expand, and the robot and a leg structure of the robot also develop in various manners. A degree-of-freedom deployment and a transmission manner of a human-like hip cannot be completely applicable to a use scenario, for example, climbing stairs.

Therefore, an embodiment of this application provides a robot hip joint, so that a leg action and a waist action of a robot can be driven. A structure is more compact, and can be applicable to a use scenario, for example, climbing stairs.

The robot hip joint provided in this embodiment of this application may be applied to a robot scenario in fields such as cloud technologies, artificial intelligence, and intelligent transportation, and may be implemented in a scenario, such as performing a human-computer interaction and serving people's daily life by using a robot.

Artificial intelligence (AI) is a theory, a method, a technology, and an application system that use a digital computer or a machine controlled by a digital computer to simulate, extend, and expand human intelligence, perceive an environment, obtain knowledge, and use the knowledge to obtain an optimal result. In other words, the artificial intelligence is a comprehensive technology in computer science and attempts to understand the essence of intelligence and produce a new intelligent machine that can react in a manner similar to human intelligence. The artificial intelligence is to study the design principles and implementation methods of various intelligent machines, to enable the machines to have the functions of perception, reasoning, and decision-making.

The artificial intelligence technology is a comprehensive discipline, and relates to a wide range of fields including both hardware-level technologies and software-level technologies. Basic artificial intelligence technologies generally include a sensor, a dedicated artificial intelligence chip, cloud computing, distributed storage, a big data processing technology, a pre-trained model technology, an operating/interaction system, electromechanical integration, and the like. The pre-trained model is also referred to as a large model or a basic model, and may be widely applied to downstream tasks in various directions of the artificial intelligence after being fine-tuned. Artificial intelligence software technologies mainly include several major directions such as a computer vision (CV) technology, a speech processing technology, a natural language processing technology, and machine learning/deep learning.

An intelligent traffic system (ITS) applied to the intelligent transportation field is also referred to as an intelligent transportation system, and is a comprehensive transportation system that effectively and comprehensively applies advanced science and technologies (an information technology, a computer technology, a data communication technology, a sensor technology, an electronic control technology, an automatic control theory, operations research, artificial intelligence, and the like) to transportation, service control, and vehicle manufacturing, and that enhances a connection between a vehicle, a road, and a user, to ensure safety, increase the efficiency, improve an environment, and save energy.

To make the objectives, technical solutions, and advantages of the embodiments of this application clearer, the following further describes the implementations of the embodiments of this application in detail with reference to the accompanying drawings. It is further noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

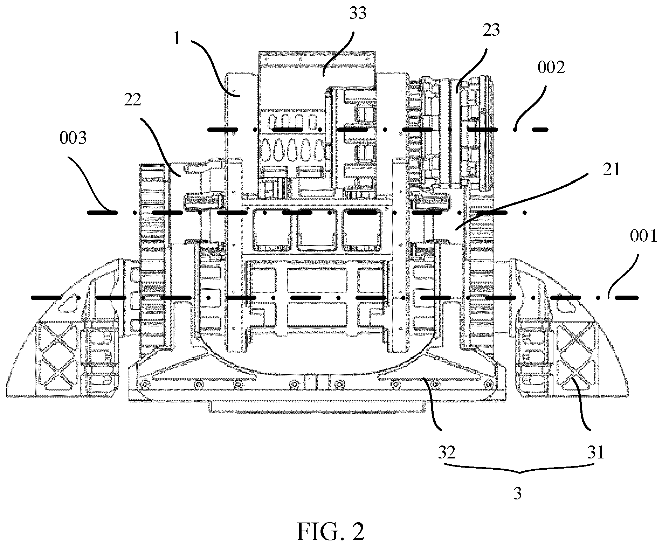

In an aspect, with reference to FIG. 1 and FIG. 2, this embodiment provides a robot hip joint, the robot hip joint including: a support assembly 1, a drive assembly 2, and an execution assembly 3,
the drive assembly 2 including a first driver 21, a second driver 22, and a third driver 23, and the execution assembly 3 including a first movable leg member 31, a second movable leg member 32, and a movable waist member 33;
the first movable leg member 31 and the second movable leg member 32 being separately and rotatably connected to the support assembly 1, the first driver 21 being in a transmission connection to the first movable leg member 31, the first driver 21 being configured to drive the first movable leg member 31 to rotate around a first axis 001, and the second driver 22 being configured to drive the second movable leg member 32 to rotate around the first axis 001;
the movable waist member 33 being rotatably connected to the support assembly 1, the third driver 23 being in a transmission connection to the movable waist member 33, and the third driver 23 being configured to drive the movable waist member 33 to rotate about a second axis 002; and
the first axis 001 being parallel to the second axis 002.

Based on the robot hip joint in this embodiment, the first movable leg member 31 and the second movable leg member 32 can be respectively driven by the first driver 21 and the second driver 22 to rotate about the first axis 001, to drive a leg action of a robot. A rotation degree of freedom of the first movable leg member 31 and a rotation degree of freedom of the second movable leg member 32 are coaxially set. The movable waist member 33 is driven by the third driver 23 to rotate about the second axis 002, to drive a waist action of the robot. The first axis 001 and the second axis 002 are disposed in parallel. The structure of the robot hip joint is more compact, and is more applicable to a use scenario, for example, climbing stairs. In the embodiments, the first axis extend in a first direction that is parallel to a second direction in which the second axis extends; the first direction and the second direction can be the same, for example, they can overlap each other or coincide with each other.

Rotation axes of the first movable leg member 31 and the second movable leg member 32 are disposed in a coinciding manner, so that the compactness of the structure of the robot hip joint can be improved. When the first movable leg member 31 and the second movable leg member 32 rotate, the robot has better balance and flexibility, thereby facilitating saving layout space of the support assembly 1, reducing an entire size of the support assembly 1, and further reducing a volume of the entire robot hip joint.

Besides meeting respective rotation degrees of freedom of the first movable leg member 31, the second movable leg member 32, and the movable waist member 33 in this embodiment, a degree of freedom in another direction may further be set depending on an actual requirement. For example, a degree of freedom in another rotation direction is set in series, to implement a degree of freedom in which the movable waist member 33 has a universal secondary form, so that the robot hip joint not only has a capability to pitch forward and backward, but also has a capability to swing left and right. Similarly, a degree of freedom in a vertical direction may continue to be set in series above the robot hip joint, so that an upper body of the robot has at least three degrees of freedom on the movable waist member 33.

For example, each of the first driver 21, the second driver 22, and the third driver 23 is a motor, is driven by electric power, has a built-in decelerator module, and can output driving torque that meets specific torque or a specific rotation speed.

In one embodiments, a rated power of the first driver 21 is the same as that of the second driver 22, so that the first movable leg member 31 and the second movable leg member 32 have the same dynamic feature, and can perform independent and coordinated rotational motion, thereby driving the entire robot to perform actions such as going forward, going backward, climbing upward, and climbing downward.

In some possible implementations, when the robot hip joint in this embodiment of this application is applied to a robot scenario, the second axis 002 is located above the first axis 001 (with reference to an orientation shown in FIG. 1), that is, the movable waist member 33 is located above the first movable leg member 31 or the second movable leg member 32, so that a structure in a front-rear direction of the robot hip joint is compact. When the first movable leg member 31 and the second movable leg member 32 are located below the movable waist member 33 for support, there is a better force-bearing layout, thereby facilitating improving the force-bearing stability of the robot.

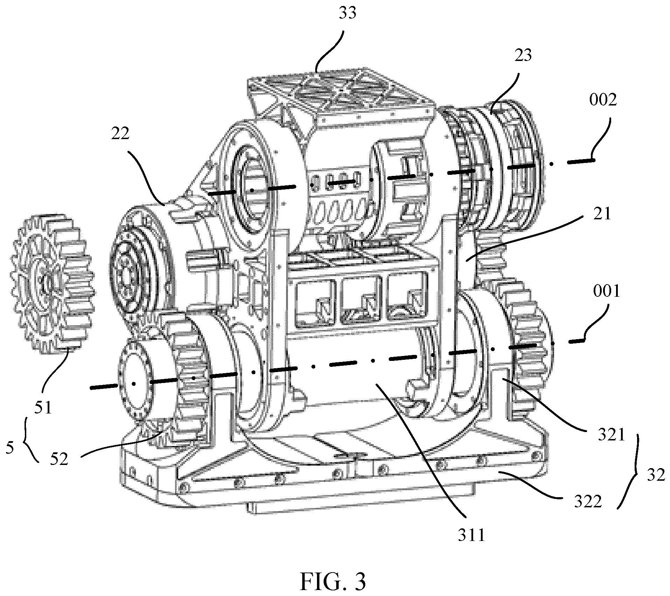

With reference to FIG. 3, in some embodiments, one of the first movable leg member 31 and the second movable leg member 32 includes a rotating shaft member 311, the rotating shaft member 311 is rotatably located on the support assembly 1 along the first axis 001, and an axis of the rotating shaft member 311 coincides with the first axis 001.

The other one of the first movable leg member 31 and the second movable leg member 32 includes a shaft sleeve member 321, the shaft sleeve member 321 is sleeved on the rotating shaft member 311, an inner axis surface of the shaft sleeve member 321 is connected to an outer peripheral surface of the rotating shaft member 311, and an axis of the shaft sleeve member 321 coincides with both the rotating shaft member 311 and the first axis 001. The rotating shaft member 311 and the shaft sleeve member 321 can separately rotate about the first axis 001.

The first movable leg member 31 and the second movable leg member 32 in this embodiment are rotatably connected to the support assembly 1 along the same axis by using the rotating shaft member 311 and the shaft sleeve member 321. The rotating shaft member 311 is directly and rotatably connected to the support assembly 1, and the shaft sleeve member 321 is indirectly and rotatably connected to the support assembly 1. When a status of a connection between the shaft sleeve member 321 and the support assembly 1 is analyzed, the rotating shaft member 311 may be considered as a part of the support assembly 1.

For example, the rotating shaft member 311 is a part of the first movable leg member 31, and the shaft sleeve member 321 is a part of the second movable leg member 32. Alternatively, the rotating shaft member 311 is a part of the second movable leg member 32, and the shaft sleeve member 321 is a part of the first movable leg member 31.

In some possible implementations, the rotating shaft member 311 is rotatably connected to the support assembly 1 by using a bearing member. The shaft sleeve member 321 is rotatably connected to the rotating shaft member 311 by using the bearing member.

With reference to FIG. 2, FIG. 3, and FIG. 4, in some embodiments, the first movable leg member 31 further includes a first connecting plate 312, the first connecting plate 312 is connected to the rotating shaft member 311, and the first connecting plate 312 rotates with the rotating shaft member 311 about the first axis 001.

The second movable leg member 32 further includes a second connecting plate 322, the second connecting plate 322 is connected to the shaft sleeve member 321, and the second connecting plate 322 rotates with the shaft sleeve member 321 about the first axis 001.

The first connecting plate 312 and the second connecting plate 322 are respectively used for connecting different leg components 4, and are used for respectively driving the different leg components 4 to rotate about the first axis 001.

Based on that a coaxial rotational connection between the first movable leg member 31 and the second movable leg member 32 is implemented by using the rotating shaft member 311 and the shaft sleeve member 321, the first connecting plate 312 is connected to the rotating shaft member 311, so that the leg component 4 can be connected to the rotating shaft member 311. When the rotating shaft member 311 rotates about the first axis 001, the leg component 4 can be driven to act, to implement an action such as taking a step or raising a leg. The second connecting plate 322 is connected to the shaft sleeve member 321, to connect the another leg component 4 to the shaft sleeve member 321. When the shaft sleeve member 321 rotates about the first axis 001, the leg component 4 can be driven to act, to implement an action such as taking a step or raising a leg.

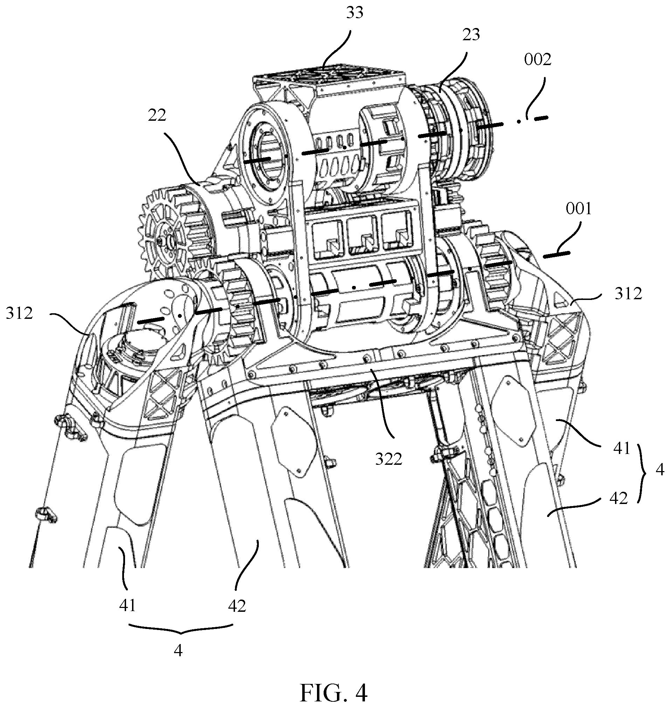

In some possible implementations, with reference to FIG. 4, the leg component 4 includes a first leg component 41 and a second leg component 42. The first leg component 41 is connected to the first connecting plate 312. When the rotating shaft member 311 rotates about the first axis 001, the first leg component 41 can be driven to implement an action such as taking a step or raising a leg. The second leg component 42 is connected to the second connecting plate 322. When the shaft sleeve member 321 rotates about the first axis 001, the second leg component 42 can be driven to implement an action such as taking a step or raising a leg.

With reference to FIG. 3, in some embodiments, the rotating shaft member 311 is in a transmission connection to the first driver 21, and the shaft sleeve member 321 is in a transmission connection to the second driver 22.

In this embodiment, the rotating shaft member 311 is in a transmission connection to the first driver 21, and the first driver 21 can be configured to drive the rotating shaft member 311 to rotate about the first axis 001 relative to the support assembly 1. The shaft sleeve member 321 is in a transmission connection to the second driver 22, and the second driver 22 can be configured to drive the shaft sleeve member 321 to rotate about the first axis 001 relative to at least one of the support assembly 1 and the rotating shaft member 311, thereby implementing independent actions of the first movable leg member 31 and the second movable leg member 32. For example, when the first driver 21 and the second driver 22 alternately drive the rotating shaft member 311 and the shaft sleeve member 321, the first movable leg member 31 and the second movable leg member 32 can perform an action such as alternately taking a step or alternately raising a leg.

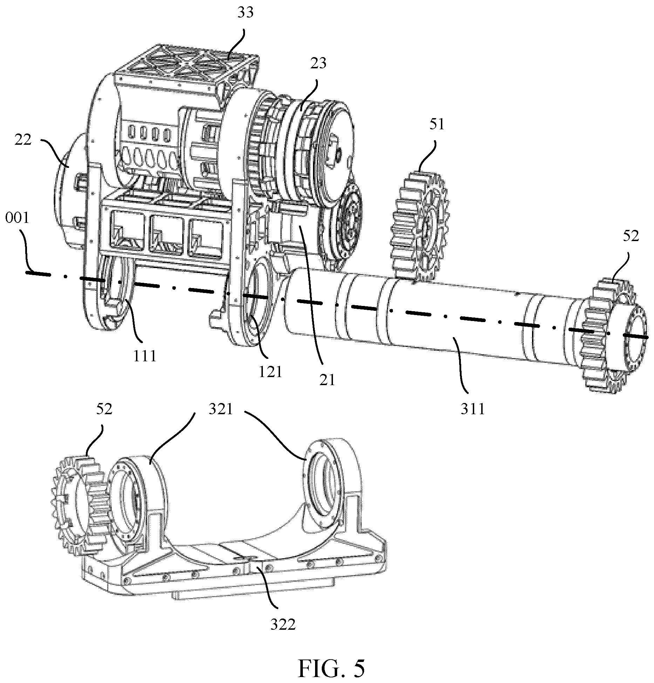

With reference to FIG. 5, in some embodiments, a quantity of first connecting plates 312 is two, and a quantity of shaft sleeve members 321 is two. Two ends of the rotating shaft member 311 respectively protrude from outer sides of the support assembly 1, the two first connecting plates 312 are respectively located at the two ends of the rotating shaft member 311, and the two shaft sleeve members 321 are respectively located at positions of the rotating shaft member 311 that are close to the two ends.

The second connecting plate 322 extends along a direction of the first axis 001, and is separately connected to the two shaft sleeve members 321.

The first movable leg member 31 can be connected to at least two leg components 4 by using the two first connecting plates 312 disposed at the two ends of the rotating shaft member 311. The at least two leg components 4 are disposed at an interval, thereby facilitating providing stable support for the robot.

The second movable leg member 32 can be rotatably connected to the rotating shaft member 311 stably and reliably by using the two shaft sleeve members 321 disposed close to the two ends of the rotating shaft member 311. The second connecting plate 322 extends in the direction of the first axis 001 and is connected to the two shaft sleeve members 321, so that it can be ensured that the second connecting plate 322 can reliably and stably rotate about the first axis 001, thereby driving the leg component 4 connected to the second connecting plate 322 to stably and reliably act.

In some possible implementations, with reference to FIG. 4, a quantity of first leg components 41 is two. The two first leg components 41 are respectively located at the two ends of the rotating shaft member 311, and are connected to the rotating shaft member 311 by using the first connecting plate 312, so that the rotating shaft member 311 can be driven by using the first driver 21 to rotate. The rotating shaft member 311 drives the first connecting plate 312 to rotate, and the first connecting plate 312 drives the first leg component 41 to rotate about the first axis 001.

In some other possible implementations, with reference to FIG. 4, a quantity of second leg components 42 is two. The two second leg components 42 are respectively located at two ends of the second connecting plate 322, and are connected to the two shaft sleeve members 321 by using the second connecting plate 322, so that the shaft sleeve members 321 can be driven by using the second driver 22 to rotate. The shaft sleeve members 321 drive the second connecting plate 322 to rotate, and the second connecting plate 322 drives the second leg component 42 to rotate about the first axis 001.

For example, the two first leg components 41 and the two second leg components 42 are disposed in a sequence of the first leg component 41-the second leg component 42-the second leg component 42-the first leg component 41 along the direction of the first axis 001, to form a reliable and stable four-leg support structure, thereby implementing stable support for the robot hip joint and the robot.

When the first driver 21 and the second driver 22 are alternately started, the two first leg components 41 on an outer side and the two second leg components 42 on an inner side alternately act, thereby implementing an action of the robot, for example, going forward, going backward, or climbing.

Another degree-of-freedom driving mechanism may be further disposed between the first connecting plate and the first leg component 41, for example, driving autorotation of the first leg component 41.

Another degree-of-freedom driving mechanism may alternatively be disposed between the second connection plate and the second leg component 42, for example, driving autorotation of the second leg component 42.

In some possible implementations, a structure, for example, a jacket, is disposed on an axis segment of the rotating shaft member 311 that is not covered by the shaft sleeve member 321. In this way, the structure has a function of preventing the rotating shaft member 311 from moving axially. In addition, the structure has an internal and external protection function, thereby improving the working reliability of the robot hip joint in this embodiment.

With reference to FIG. 2, in some embodiments, the first driver 21 and the second driver 22 are located on the support assembly 1 along a third axis 003, and the third axis 003 is parallel to the first axis 001. The third driver 23 is located on the support assembly 1 along the second axis 002.

The first driver 21 and the second driver 22 are disposed along the third axis 003 parallel to the first axis 001, thereby facilitating improving the compactness and balance of the structure of the robot hip joint in this embodiment. The first driver 21 and the second driver 22 perform power transmission on the rotating shaft member 311 and the shaft sleeve member 321 at a position parallel to the first axis 001, thereby facilitating simplifying a transmission mechanism 5, increasing the transmission efficiency, and improving the working reliability of the first movable leg member 31 and the second movable leg member 32. In the embodiments of the application, the third axis extends in a third direction that is parallel to the first direction in which the first axis extends; the first direction and the third direction can be the same, for example, they can overlap each other or coincide with each other.

The third driver 23 and the movable waist member 33 are coaxially disposed, so that the compactness of an upper structure of the robot hip joint can be improved.

In some possible implementations, the first driver 21 and the second driver 22 are symmetrically disposed along a central plane of the support assembly 1. The central plane of the support assembly 1 is a plane that is separately perpendicular to the first axis 001, the second axis 002, and the third axis 003, and that passes through midpoints of the first axis 001, the second axis 002, and the third axis 003, and may be considered as a plane in which a center of gravity of the robot hip joint is located. The first driver 21 and the second driver 22 are symmetrically disposed along the plane, so that balance of the robot hip joint can be greatly improved, and working performance of the robot hip joint can be improved.

With reference to FIG. 3, in some embodiments, a transmission mechanism 5 is disposed between the first driver 21 and the first movable leg member 31, and a transmission mechanism 5 is disposed between the second driver 22 and the second movable leg member 32.

The transmission mechanism 5 is at least one of a meshing transmission mechanism, a belt transmission mechanism, and a chain transmission mechanism.

By means of the transmission mechanism 5, power transmission between the first driver 21 and the first movable leg member 31 (for example, the rotating shaft member 311) can be implemented, and power transmission between the second driver 22 and the second movable leg member 32 (for example, the shaft sleeve member 321) can be implemented. Actions of the two movable leg members are independently driven and independently transmitted, thereby presenting better reliability and stability.

In some possible implementations, with reference to FIG. 3, output shafts of the first driver 21 and the second driver 22 respectively face an outer side of the support assembly 1, that is, the first driver 21 and the second driver 22 are disposed back to back. The output shaft of the first driver 21 extends in a direction away from the second driver 22, and the output shaft of the second driver 22 extends in a direction away from the first driver 21. Therefore, the output shaft of the first driver 21 and the output shaft of the second driver 22 are respectively located on two opposite sides of the support assembly 1 along the third axis 003.

The output shaft of the first driver 21 is in a transmission connection to the rotating shaft member 311 on one side of the support assembly 1. The output shaft of the second driver 22 is in a transmission connection to the rotating shaft member 311 on the other side of the support assembly 1. The two transmission mechanisms 5 are respectively located on the two sides of the support assembly 1 and can perform power transmission without interfering with each other, thereby facilitating simplifying a design and assembly difficulty of the transmission mechanism 5. In addition, the two transmission mechanisms 5 are respectively located on the two sides of the support assembly 1, thereby further facilitating improving balance of the robot hip joint.

With reference to FIG. 3 and FIG. 5, in some embodiments, the transmission mechanism 5 includes a first gear member 51 and a second gear member 52, the first gear member 51 is connected to the output shaft of the first driver 21 or the second driver 22, the second gear member 52 is connected to the first movable leg member 31 and the second movable leg member 32, and the first gear member 51 is in a meshing connection to the second gear member 52.

By means of a meshing connection between the first gear member 51 and the second gear member 52, a transmission connection between the first driver 21 and the rotating shaft member 311 or the shaft sleeve member 321, and a transmission connection between the second driver 22 and the rotating shaft member 311 or the shaft sleeve member 321 are implemented, which has advantages such as a compact structure, high transmission precision, high transmission efficiency, and high reliability.

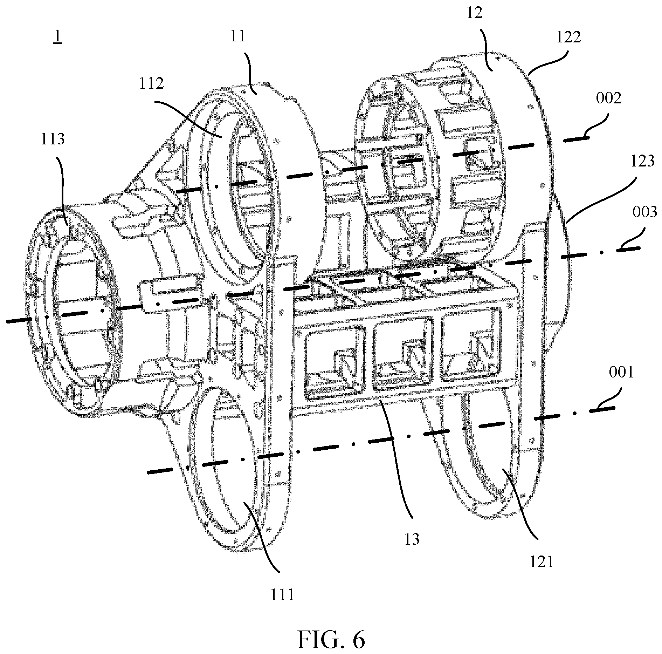

With reference to FIG. 6, FIG. 7, and FIG. 8, in some embodiments, the support assembly 1 includes a first mechanical part 11, a second mechanical part 12, and a third mechanical part 13.

The first mechanical part 11 and the second mechanical part 12 are disposed at an interval along an axis direction of the first axis 001 or the second axis 002, and are respectively located on two sides of the third mechanical part 13.

A first shaft sleeve portion 111 is disposed at a position at which the first mechanical part 11 intersects the first axis 001, a second shaft sleeve portion 121 is disposed at a position at which the second mechanical part 12 intersects the first axis 001, and the first shaft sleeve portion 111 and the second shaft sleeve portion 121 are used for being rotatably connected to at least one of the first movable leg member 31 and the second movable leg member 32.

A third shaft sleeve portion 112 is disposed at a position at which the first mechanical part 11 intersects the second axis 002, a fourth shaft sleeve portion 122 is disposed at a position at which the second mechanical part 12 intersects the second axis 002, and the third shaft sleeve portion 112 and the fourth shaft sleeve portion 122 are used for being rotatably connected to the movable waist member 33.

In the support assembly 1 in this embodiment, the first mechanical part 11 and the second mechanical part 12 are respectively symmetrically disposed on the two sides of the third mechanical part 13, so that the support assembly 1 has better structural balance.

The first shaft sleeve portion 111 and the second shaft sleeve portion 121 can provide stable and reliable double-point support for at least one of the first movable leg member 31 and the second movable leg member 32, to ensure that the first movable leg member 31 and the second movable leg member 32 can stably and reliably rotate about the first axis 001.

The third shaft sleeve portion 112 and the fourth shaft sleeve portion 122 can provide stable and reliable double-point support for the movable waist member 33, to ensure that the movable waist member 33 can stably and reliably rotate about the first axis 001.

For example, the first shaft sleeve portion 111 and the second shaft sleeve portion 121 are used for supporting the rotating shaft member 311, and the two ends of the rotating shaft member 311 respectively extend and protrude from outer sides of the first shaft sleeve portion 111 and an outer side of the second shaft sleeve portion 121. One of the two shaft sleeve members 321 is located on the outer side of the first shaft sleeve portion 111, and the other shaft sleeve member 321 is located on the outer side of the second shaft sleeve portion 121. After the two shaft sleeve members 321 are connected by using the second connecting plate 322, the first shaft sleeve portion 111 and the second shaft sleeve portion 121 can provide an axial limit, to ensure that the second movable leg member 32 does not move axially.

In some other possible implementations, with reference to FIG. 5, a second gear used as a follower in the transmission mechanism 5 is sleeved on an inner side of an end portion of the rotating shaft member 311, to implement a power connection between the rotating shaft member 311 and the first driver 21 or the second driver 22. Alternatively, the second gear is located on an axial side of the shaft sleeve member 321, to implement a power connection between the shaft sleeve member 321 and the first driver 21 or the second driver 22.

In some other possible implementations, the first mechanical part 11, the second mechanical part 12, and the third mechanical part 13 are of assembled structures. That is, after being separately manufactured, the three mechanical parts are detachably or undetachably combined together in a manner such as a soldering connection or a fastener connection, to form a stable and reliable integral structure. In this way, it is beneficial to reducing processing difficulty of the support assembly 1, reducing production costs of the support assembly 1, reducing the mass of the support assembly 1, and improving the portability of the robot hip joint.

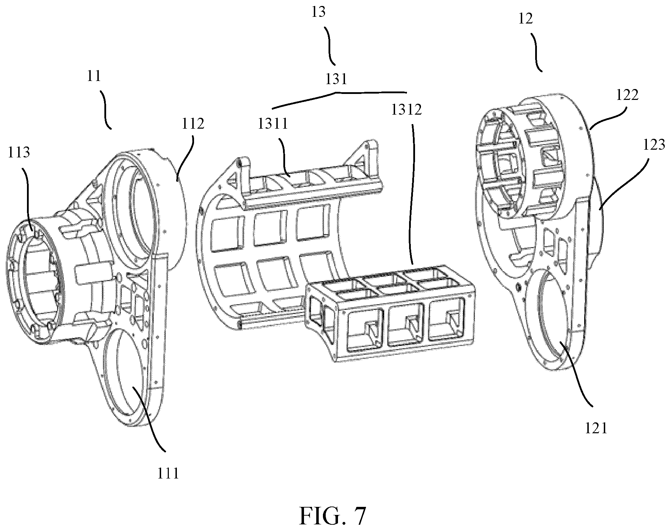

With reference to FIG. 6 and FIG. 7, in some embodiments, a first mounting portion 113 is disposed at a position at which the first mechanical part 11 intersects the third axis 003, and a second mounting portion 123 is disposed at a position at which the second mechanical part 12 intersects the third axis 003. The first mounting portion 113 is configured to be connected to the second driver 22, and the second mounting portion 123 is configured to be connected to the first driver 21.

The first driver 21 and the second driver 22 can be stably and reliably connected to the support assembly 1 by using the first mounting portion 113 and the second mounting portion 123.

With reference to FIG. 6 and FIG. 7, in some embodiments, the first shaft sleeve portion 111, the third shaft sleeve portion 112, and the first mounting portion 113 are triangularly located on the first mechanical part 11. The second shaft sleeve portion 121, the fourth shaft sleeve portion 122, and the second mounting portion 123 are triangularly located on the second mechanical part 12.

Therefore, the support assembly 1 in this embodiment has advantages such as a compact layout, good stability, and high structural strength, so that the reliability of the robot hip joint can be ensured.

With reference to FIG. 6, FIG. 7, and FIG. 8, in some embodiments, the third mechanical part 13 includes at least one frame body 131. The at least one frame body 131 is connected between the first mechanical part 11 and the second mechanical part 12, and the at least one frame body 131 avoids/ is positioned away from the first axis 001, the second axis 002, and the third axis 003.

The at least one frame body 131 is used as the third mechanical part 13. In this way, it is beneficial to avoid the first axis 001, the second axis 002, and the third axis 003, to further avoid the structures such as the rotating shaft member 311, the movable waist member 33, and the driver that are disposed along the three axes, thereby improving utilization of internal space of the support assembly 1. In addition, it is beneficial to reduce the mass of the support assembly 1.

With reference to FIG. 6, FIG. 7, and FIG. 8, in some embodiments, the at least one frame body 131 includes an arc-shaped frame body 1311 and a cylindrical frame body 1312, and the arc-shaped frame body 1311 and the cylindrical frame body 1312 are separately connected between the first mechanical part 11 and the second mechanical part 12. The arc-shaped frame body 1311 is disposed in an edge region of the support assembly 1, and the cylindrical frame body 1312 is disposed in a middle portion of the support assembly 1. The arc-shaped frame body 1311 can not only perform a support function, but also serve as isolation protection for an internal structure of the support assembly 1. The cylindrical frame body 1312 is disposed inside and performs reliable support along a direction parallel to the first axis 001.

For example, shapes of the cylindrical frame body 1312 include, but are not limited to, a cylindrical shape, a prismatic shape, and the like. Further, the cylindrical frame body 1312 is prism-shaped, and may properly be selected according to the inner space of the support assembly 1, for example, is triangular prism-shaped or quadrangular prism-shaped.

In the embodiments disclosed herein, the robot hip joint further includes at least one rotary encoder. The at least one rotary encoder is connected to the first movable leg member 31, the second movable leg member 32, or the movable waist member 33, and is configured to detect and feed back a rotation angle of the first movable leg member 31, the second movable leg member 32, or the movable waist member 33.

The rotary encoder can measure a rotation speed of a rotating shaft of the movable leg member, and by means of photoelectric conversion, can convert mechanical quantities such as an angular displacement and an angular velocity of the rotating shaft into corresponding electric impulses that are outputted as digital quantities.

For example, the rotary encoder includes, but is not limited to, a voltage output, an open collector output, a push-pull complementary output, a long-line driver output, and the like.

In the robot hip joint in this embodiment, the rotary encoder is disposed at the first movable leg member 31, the second movable leg member 32, or the movable waist member 33, so that the rotation angle of the first movable leg member 31, the second movable leg member 32, or the movable waist member 33 can be detected and fed back in real time, to ensure that the first movable leg member 31, the second movable leg member 32, or the movable waist member 33 of the robot hip joint accurately and reliably rotate to a target position, thereby improving working precision of the robot hip joint.

In some embodiments, the robot hip joint further includes at least one torque sensor. The at least one torque sensor is connected to the first movable leg member 31, the second movable leg member 32, or the movable waist member 33, and is configured to detect and feed back torque of the first movable leg member 31, the second movable leg member 32, or the movable waist member 33.

In the robot hip joint in this embodiment, the torque sensor is disposed at the first movable leg member 31, the second movable leg member 32, or the movable waist member 33, so that working torque of the first movable leg member 31, the second movable leg member 32, or the movable waist member 33 can be detected and fed back in real time, to ensure that the first movable leg member 31, the second movable leg member 32, or the movable waist member 33 of the robot hip joint accurately and reliably outputs the corresponding working torque, thereby improving working safety and reliability of the robot hip joint.

According to another aspect, with reference to FIG. 4, an embodiment provides a robot, the robot including: the robot hip joint provided in the embodiments of this application.

The robot in this embodiment uses the robot hip joint provided in the embodiments of this application, and has all beneficial technical effects of all the embodiments in this specification.

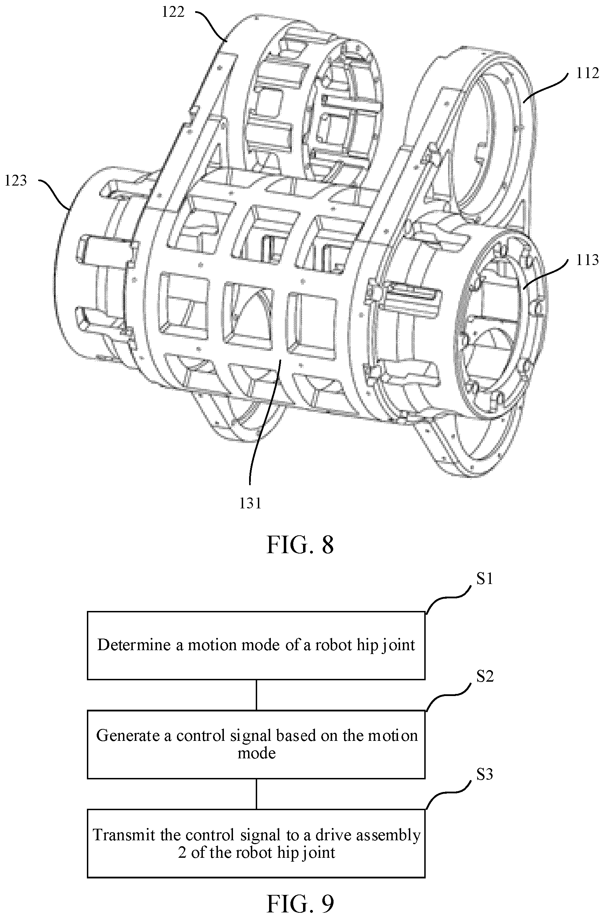

According to another aspect, with reference to FIG. 9, an embodiment provides a control method, the control method being used for controlling the robot hip joint in the embodiments of this application, and the control method including the following operations:

### Operation S1: Determine a motion mode of the robot hip joint.

The motion mode of the robot hip joint includes, but is not limited to: a mode in which a first movable leg member 31 and a second movable leg member 32 stand close, a mode in which the first movable leg member 31 and the second movable leg member 32 stand crosswise, a mode in which the first movable leg member 31 and the second movable leg member 32 travel in a crossed gait, a mode in which a movable waist member 33 pitches and moves, and the like.

For example, when the motion mode is a mode of travelling in a crossed gait, when moving on a non-flat ground, the robot to which the robot hip joint is applied may travel in a crossed gait by using two movable leg members, and the two movable leg members alternately travel.

### Operation S2: Generate a control signal based on the motion mode.

In some possible implementations, the control signal includes a first control signal corresponding to a first driver 21, a second control signal corresponding to a second driver 22, and a third control signal corresponding to a third driver 23.

The first control signal is used for controlling the first driver 21, the second control signal is used for controlling the second driver 22, and the third control signal is used for controlling the third driver 23. The first control signal, the second control signal, and the third control signal respectively include, but are not limited to, a rotation angle instruction, a rotation speed instruction, a rotation torque instruction, and the like.

### Operation S3: Transmit the control signal to a drive assembly 2 of the robot hip joint.

For example, when the motion mode is the mode of travelling in a crossed gait, in an initial state, the first movable leg member 31 and the second movable leg member 32 stand crosswise or close. The second movable leg member 32 is used as support, and a bottom-layer drive board of the first driver 21 first controls, based on the received first control signal, the first driver 21 to rotate, to drive the first movable leg member 31 to rotate about a first axis 001 to move to a next position. After that, the first movable leg member 31 is then used as support, and a bottom-layer drive board of the second driver 22 controls, based on the received second control signal, the second driver 22 to rotate, to drive the second movable leg member 32 to rotate about the first axis 001 to move to a next position. The first driver 21 and the second driver 22 alternately receive the control signal, and the first movable leg member 31 and the second movable leg member 32 alternately move, so that the robot to which the robot hip joint is applied implements travelling in a crossed gait.

For another example, when the motion mode is a pitch mode, a bottom-layer drive board of the third driver 23 controls, based on the received third control signal, the third driver 23 to rotate, to drive the movable waist member 33 to rotate about a second axis 001, so that a pitch angle of the robot to which the robot hip joint is applied is adjusted.

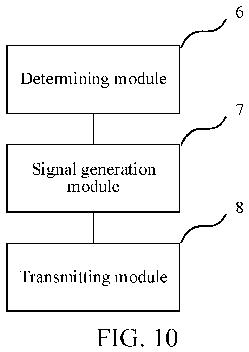

According to another aspect, with reference to FIG. 10, an embodiment provides a control apparatus, the control apparatus being configured to control the robot hip joint in the embodiments of this application, and the control apparatus including: a determining module 6, configured to determine a motion mode of the robot hip joint; a signal generation module 7, configured to generate a control signal based on the motion mode; and a transmitting module 8, configured to transmit the control signal to a drive assembly 2 of the robot hip joint.

The control apparatus in this embodiment can generate different control signals based on different motion modes, to control the drive assembly to work based on different control parameters, to drive an execution assembly to complete different motions, so that the robot to which the robot hip joint is applied implements different motions.

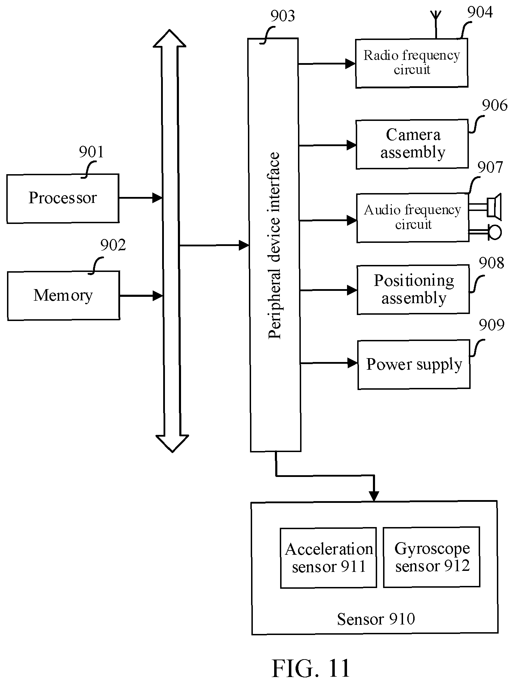

FIG. 11 is a structural block diagram of a computer device according to an embodiment of this application.

The computer device may be a portable mobile terminal, such as a computer device, a smartphone, a tablet computer, an Moving Picture Experts Group Audio Layer 3 (MP3) player, a Moving Picture Experts Group Audio Layer 4 (MP4) player, a notebook computer, or a desktop computer that are configured to control a robot hip joint or a robot to which a robot hip joint is applied. The computer device may further be referred to as another name such as user equipment, a portable terminal, a laptop terminal, or a desktop terminal. In this embodiment of this application, the computer device may be implemented as a control device part in the robot.

Generally, the computer device includes a processor 901 and a memory 902.

The processor 901 may include one or more processing cores, such as a four-core processor or an eight-core processor. The processor 901 may be implemented in at least one hardware form of a digital signal processor (DSP), a field-programmable gate array (FPGA), and a programmable logic array (PLA). The processor 901 may alternatively include a main processor and a coprocessor. The main processor is configured to process data in an active state, and is alternatively referred to as a central processing unit (CPU). The coprocessor is a low-power processor configured to process data in a standby state.

The memory 902 may include one or more computer-readable storage media. The computer-readable storage medium may be non-transient. The memory 902 may further include a high-speed random access memory and a non-volatile memory, for example, one or more disk storage devices or flash storage devices. In some embodiments, a non-transitory computer-readable storage medium in the memory 902 is configured to store at least one instruction, and the at least one instruction is used for being executed by the processor 901, to implement the control method provided in the embodiments of this application.

In some embodiments, the computer device further includes: a peripheral device interface 903 and at least one peripheral device. The processor 901, the memory 902, and the peripheral device interface 903 may be connected by using a bus or a signal cable. Each peripheral device may be connected to the peripheral device interface 903 by using a bus, a signal cable, or a circuit board. Specifically, the peripheral device includes at least one of a radio frequency circuit 904, a camera assembly 906, an audio circuit 907, a positioning assembly 908, and a power supply 909.

The peripheral device interface 903 may be configured to connect the at least one peripheral device related to input/output (I/O) to the processor 901 and the memory 902. In some embodiments, the processor 901, the memory 902, and the peripheral device interface 903 are integrated on the same chip or circuit board. In some other embodiments, any or both of the processor 901, the memory 902, and the peripheral device interface 903 may be implemented on an independent chip or circuit board. This is not limited in the embodiments.

The radio frequency circuit 904 is configured to receive and transmit a radio frequency signal, also referred to as an electromagnetic signal. The radio frequency circuit 904 communicates with a communication network and other communication devices by using the electromagnetic signal. The radio frequency circuit 904 converts an electrical signal into an electromagnetic signal for transmission, or converts a received electromagnetic signal into an electrical signal. In one embodiments, the radio frequency circuit 904 includes: an antenna system, a radio frequency transceiver, one or more amplifiers, a tuner, an oscillator, a digital signal processor, a codec chipset, a user identity module card, and the like. The radio frequency circuit 904 may communicate with other terminals through at least one wireless communication protocol. The wireless communication protocol includes, but is not limited to, at least one of a worldwide web, a metropolitan area network, an intranet, generations of mobile communication networks (2G, 3G, 4G, and 5G), a wireless local area network, and/or a wireless fidelity (Wi-Fi) network. In some embodiments, the radio frequency circuit 904 may further include a circuit related to near field communication (NFC). This is not limited in this embodiment of this application.

The camera assembly 906 is configured to collect images or videos. In one embodiments, the camera assembly 906 includes a main camera, a depth of field camera, a wide-angle camera, a long-focus camera, and the like, and may implement visual detection on an external environment, so that the robot can perform visual detection by using a computer vision technology.

The audio circuit 907 may include a microphone and a speaker. The microphone is configured to collect sound waves of a user and an environment, convert the sound waves into an electrical signal, and input the electrical signal into the processor 901 for processing or into the radio frequency circuit 904 for implementing voice communication. For the purpose of stereo collection or noise reduction, there may be a plurality of microphones, respectively disposed at different portions of the computer device. The microphone may further be an array microphone or an omni-directional collection microphone. The speaker is configured to convert the electrical signal from the processor 901 or the radio frequency circuit 904 into sound waves. The speaker may be a conventional film speaker, or may be a piezoelectric ceramic speaker. When the speaker is the piezoelectric ceramic speaker, the speaker not only can convert an electrical signal into an acoustic wave audible to a human being, but also can convert an electrical signal into an acoustic wave inaudible to a human being, for ranging and other purposes. The positioning assembly 908 is configured to determine a current geographic position of the computer device, to implement navigation or a location based service (LBS). The positioning assembly 908 may be a positioning assembly based on the Global Positioning System (GPS), the BeiDou system, or the Galileo system.

The power supply 909 is configured to supply power to assemblies in the computer device. The power supply 909 may be an alternating current, a direct current, a disposable battery, or a rechargeable battery. When the power supply 909 includes a rechargeable battery, the rechargeable battery may be a wired rechargeable battery or a wireless rechargeable battery. The wired rechargeable battery is a battery charged through a wired line, and the wireless rechargeable battery is a battery charged through a wireless coil. The rechargeable battery may further be configured to support a fast charging technology.

In some embodiments, the computer device further includes one or more sensors 910. The one or more sensors 910 include, but are not limited to: an acceleration sensor 911 and a gyroscope sensor 912.

The acceleration sensor 911 may detect magnitude of acceleration on three coordinate axes of a coordinate system established with the computer device. For example, the acceleration sensor 911 may be configured to detect components of gravity acceleration on the three coordinate axes. The processor 901 may send control information to the robot based on a gravity acceleration signal collected by the acceleration sensor 911, to control motion of the robot.

The gyroscope sensor 912 may detect a body direction and a rotation angle of the computer device. The gyroscope sensor 912 may cooperate with the acceleration sensor 911 to collect an action of the robot. The processor 901 may implement the following functions according to the data collected by the gyroscope sensor 912: action sensing.

A person skilled in the art may understand that the structure shown in FIG. 11 does not constitute any limitation on the computer device, and the computer device may include more or fewer components than those shown in the figure, or some components may be combined, or a different component deployment may be used.

An embodiment of this application further provides a computer device, the computer device including a memory and a processor, the memory having at least one piece of program code stored therein, and the program code being loaded and executed by the processor, to implement the above control method for moving a robot.

According to an aspect of the embodiments of this application, this embodiment provides a non-volatile computer-readable storage medium, the non-volatile computer-readable storage medium having a computer program stored therein, the computer program being configured to be executed by a processor, to implement the above control method.

According to an aspect of the embodiments of this application, this embodiment provides a chip, the chip including at least one of a programmable logic circuit and program instructions, and during running of an electronic device on which the chip is installed, being configured to implement the above control method.

According to an aspect of the embodiments of this application, a computer program product is provided, the computer program product including computer instructions, the computer instructions being stored in a computer-readable storage medium, and a processor reading the computer instructions from the computer-readable storage medium and executing the computer instructions, to implement the above control method.

"Several" and "at least one" mentioned in the specification means one or more, and "a plurality of" and "at least two" means two or more.

In the descriptions of the embodiments of this application, unless otherwise explicitly specified or defined, the terms such as "install", "connect", and "connection" are to be understood in a broad sense. For example, the connection may be a fixed connection, a detachable connection, or an integral connection; or the connection may be a mechanical connection; or the connection may be a direct connection, an indirect connection through an intermediate medium, internal communication between two components, or an interaction relationship between two components. A person of ordinary skill in the art may understand the specific meanings of the foregoing terms in the embodiments of this application according to specific situations.

In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more features. In the descriptions of the embodiments of this application, "a plurality of" means two or more, unless otherwise definitely and specifically limited.

In the embodiments of this application, unless otherwise explicitly stipulated and restricted, that a first feature is "on" or "under" a second feature may include that the first feature and the second feature are in direct contact, or may include that the first feature and the second feature are not in direct contact but in contact by using other features between the first feature and the second feature. Moreover, the first feature being "on" or "above" or "over" the second feature includes the first feature being directly above and obliquely above the second feature, or simply means that the level of the first feature is higher than that of the second feature. That the first feature is "below", "under", or "beneath" the second feature includes that the first feature is right below and at the inclined bottom of the second feature or merely indicates that a level of the first feature is lower than that of the second feature.

In the descriptions of this specification, descriptions using reference terms "some implementations", "an implementation", "some implementations", "an exemplary implementation", "an example", "a specific example", or "some examples" mean that specific features, structures, materials, or characteristics described with reference to the implementation or example are included in at least one implementation or example of the embodiments of this application.

The above descriptions are merely embodiments of this application, and are not intended to limit the embodiments of this application. Any modification, equivalent replacement, improvement, or the like made within the principle of the embodiments of this application shall fall within the protection scope of the embodiments of this application.

## Claims

1. A robot hip joint, the robot hip joint comprising:
a support assembly (1), a drive assembly (2), and an execution assembly (3),
the drive assembly (2) comprising a first driver (21), a second driver (22), and a third driver (23), and the execution assembly (3) comprising a first movable leg member (31), a second movable leg member (32), and a movable waist member (33);
the first movable leg member (31) and the second movable leg member (32) being separately and rotatably connected to the support assembly (1), the first driver (21) being in a transmission connection to the first movable leg member (31), the first driver (21) being configured to drive the first movable leg member (31) to rotate around a first axis (001), and the second driver (22) being configured to drive the second movable leg member (32) to rotate around the first axis (001);
the movable waist member (33) being rotatably connected to the support assembly (1), the third driver (23) being in a transmission connection to the movable waist member (33), and the third driver (23) being configured to drive the movable waist member (33) to rotate about a second axis (002); and
the first axis (001) being parallel to the second axis (002).

2. The robot hip joint according to claim 1, wherein one of the first movable leg member (31) and the second movable leg member (32) comprises a rotating shaft member (311), and the rotating shaft member (311) is rotatably located on the support assembly (1) along the first axis (001), and/or the other one of the first movable leg member (31) and the second movable leg member (32) comprises a shaft sleeve member (321), and the shaft sleeve member (321) is sleeved on the rotating shaft member (311); and
the rotating shaft member (311) and/or the shaft sleeve member (321) are configured to separately rotate about the first axis (001).

3. The robot hip joint according to claim 1 or 2, wherein the first movable leg member (31) further comprises a first connecting plate (312), and the first connecting plate (312) is connected to the rotating shaft member (311), and is configured to rotate with the rotating shaft member (311) about the first axis (001); and/or
the second movable leg member (32) further comprises a second connecting plate (322), and the second connecting plate (322) is connected to the shaft sleeve member (321), and is configured to rotate with the shaft sleeve member (321) about the first axis (001); and/or
the first connecting plate (312) and the second connecting plate (322) are separately configured to connect to different leg components (4), and respectively drive the leg components (4) to rotate about the first axis (001).

4. The robot hip joint according to claim any one of claims 1 to 3, wherein the rotating shaft member (311) is in a transmission connection to the first driver (21), and/or the shaft sleeve member (321) is in a transmission connection to the second driver (22).

5. The robot hip joint according to claim any one of claims 1 to 4, wherein a quantity of first connecting plates (312) is two, and a quantity of shaft sleeve members (321) is two;
two ends of the rotating shaft member (311) respectively protrude from outer sides of the support assembly (1), the two first connecting plates (312) are respectively located at the two ends of the rotating shaft member (311), and the two shaft sleeve members (321) are respectively located at positions of the rotating shaft member (311) that are close to the two ends; and/or
the second connecting plate (322) extends along a direction of the first axis (001), and is separately connected to the two shaft sleeve members (321).

6. The robot hip joint according to any one of claims 1 to 5, wherein the first driver (21) and the second driver (22) are located on the support assembly (1) along a third axis (003), and the third axis (003) is parallel to the first axis (001); and/or the third driver (23) is located on the support assembly (1) along the second axis (002).

7. The robot hip joint according to claim any one of claims 1 to 6, wherein a transmission mechanism (5) is disposed between the first driver (21) and the first movable leg member (31), and/or a transmission mechanism (5) is disposed between the second driver (22) and the second movable leg member (32); and
the transmission mechanism (5) is at least one of a meshing transmission mechanism, a belt transmission mechanism, and a chain transmission mechanism.

8. The robot hip joint according to claim any one of claims 1 to 7, wherein the transmission mechanism (5) comprises a first gear member (51) and a second gear member (52);
the first gear member (51) is connected to an output shaft of the first driver (21) or the second driver (22), the second gear member (52) is connected to the first movable leg member (31) and the second movable leg member (32), and/or the first gear member (51) is in a meshing connection to the second gear member (52).

9. The robot hip joint according to any one of claims 1 to 8, wherein the support assembly (1) comprises a first mechanical part (11), a second mechanical part (12), and a third mechanical part (13);
wherein the first mechanical part (11) and the second mechanical part (12) are disposed at an interval along an axis direction of the first axis (001) or the second axis (002), and are respectively located on two sides of the third mechanical part (13);
a first shaft sleeve portion (111) is disposed at a position at which the first mechanical part (11) intersects the first axis (001), a second shaft sleeve portion (121) is disposed at a position at which the second mechanical part (12) intersects the first axis (001), and the first shaft sleeve portion (111) and the second shaft sleeve portion (121) are configured to rotatably connect to at least one of the first movable leg member (31) and the second movable leg member (32); and/or
a third shaft sleeve portion (112) is disposed at a position at which the first mechanical part (11) intersects the second axis (002), a fourth shaft sleeve portion (122) is disposed at a position at which the second mechanical part (12) intersects the second axis (002), and the third shaft sleeve portion (112) and the fourth shaft sleeve portion (122) are configured to rotatably connect to the movable waist member (33).

10. The robot hip joint according to claim any one of claims 1 to 9, wherein a first mounting portion (113) is disposed at a position at which the first mechanical part (11) intersects the third axis (003), and a second mounting portion (123) is disposed at a position at which the second mechanical part (12) intersects the third axis (003); and the first mounting portion (113) is configured to connect to the second driver (22), and the second mounting portion (123) is configured to connect to the first driver (21).

11. The robot hip joint according to claim any one of claims 1 to 10, wherein the first shaft sleeve portion (111), the third shaft sleeve portion (112), and the first mounting portion (113) are triangularly located on the first mechanical part (11); and/or
the second shaft sleeve portion (121), the fourth shaft sleeve portion (122), and the second mounting portion (123) are triangularly located on the second mechanical part (12).

12. The robot hip joint according to any one of claims any one of claims 1 to 11, wherein the third mechanical part (13) comprises at least one frame body (131); and the at least one frame body is connected between the first mechanical part (11) and the second mechanical part (12), and/or the at least one frame body (131) is positioned away from the first axis (001) and the second axis (002).

13. The robot hip joint according to claim any one of claims 1 to 12, wherein the at least one frame body (131) comprises an arc-shaped frame body (1311) and a cylindrical frame body (1312), and the arc-shaped frame body (1311) and the cylindrical frame body (1312) are separately connected between the first mechanical part (11) and the second mechanical part (12).

14. A robot, the robot comprising: the robot hip joint according to any one of claims 1 to 13.

15. A control method, for controlling the robot hip joint according to any one of claims 1 to 13, the control method comprising:
determining a motion mode of the robot hip joint;
generating a control signal based on the motion mode; and
transmitting the control signal to a drive assembly (2) of the robot hip joint.

16. A control apparatus, the control apparatus being configured to control the robot hip joint according to any one of claims 1 to 13, and the control apparatus comprising:
a determining module (6), configured to determine a motion mode of the robot hip joint;
a signal generation module (7), configured to generate a control signal based on the motion mode; and
a transmitting module (8), configured to transmit the control signal to a drive assembly (2) of the robot hip joint.

17. A computer device, comprising a memory (901) and a processor (902), and
the memory (901) having at least one piece of program code stored therein, and the program code being loaded and executed by the processor (902), to implement the control method according to claim 15.

18. A non-volatile computer-readable storage medium, the non-volatile computer-readable storage medium having a computer program stored therein, and the computer program is executed by a processor, to implement the control method according to claim 15.

19. A chip, comprising at least one of a programmable logic circuit and program instructions, and during running of an electronic device on which the chip is installed, being configured to implement the control method according to claim 15.
